# DEMANDE DE BREVET EUROPEEN

(11) **EP 0 600 760 A1**
(43) Date de publication de la demande: **08.06.1994**
(21) Numéro de dépôt: 93402754.1
(22) Date de dépôt: 10.11.1993
(51) Int. Cl.: G02B 7/00

(54) **Dispositif pour la fixation de l'objectif d'un appareil d'analyse de document tel qu'un télécopieur**

(30) Priorité: 03.12.1992 FR 9214556
(71) Demandeur: SOCIETE D'APPLICATIONS GENERALES D'ELECTRICITE ET DE MECANIQUE SAGEM, F-75783 Paris Cédex 16 (FR)
(72) Inventeur: Cavarero, Eric, F-95000 Cergy (FR); Vegeais, Patrick, F-78112 Fourqueux (FR); Garcia, Salvador, F-95100 Argenteuil (FR)
(74) Mandataire: Bloch, Gérard

(57) **Abrégé**

L'invention concerne un dispositif pour la fixation de l'objectif d'un appareil tel qu'un télécopieur. A cet effet, il comprend un berceau (1) formant une surface cylindrique de support, et une bride de maintien (4) également cylindrique, sensiblement complémentaire du berceau sur une certaine distance axiale, la bride étant solidaire du berceau à une (5) de ses extrémités circonférentielles et ayant son autre extrémité circonférentielle (6) libre et agencée pour être rapprochée du berceau de manière à exercer, sur un objectif (11) placé entre le berceau et la bride, un effort de maintien appliquant l'objectif sur le berceau.

## Description

La présente invention concerne un dispositif pour la fixation de l'objectif d'un appareil d'analyse de document tel qu'un télécopieur.

L'objectif d'un tel appareil a pour but de focaliser l'image d'une feuille de papier sur une barrette CCD afin d'effectuer une analyse de cette image. Aussi bien la feuille de papier que la barrette d'analyse ayant une position bien déterminée par rapport à l'objectif, le réglage de celui-ci s'effectue une fois pour toute lors de la fabrication de l'appareil.

Ce réglage s'effectue en mettant l'objectif en place dans ses moyens de fixation puis en mettant, à l'emplacement des feuilles de papier à analyser, une mire engendrant, lorsque l'objectif est correctement réglé, une réponse connue de la part de la barrette CCD.

On déplace alors l'objectif longitudinalement dans ses moyens de fixation jusqu'à obtenir la réponse souhaitée de la barrette CCD, ce qui permet d'assurer que l'image de la mire est convenablement mise au point sur cette barrette, et donc que l'objectif est à sa position optimale. L'objectif est alors fixé dans cette position.

Les moyens généralement utilisés jusqu'à présent pour assurer la fixation de l'objectif comprennent deux plans formant un dièdre dans lequel l'objectif est disposé et maintenu par une bride. Un tel agencement est par exemple décrit dans le document JP-A-6061710.

Cet agencement présente l'inconvénient d'introduire des contraintes localisées, notamment du fait de l'appui de l'objectif le long d'une de ses génératrices sur chacun des plans du dièdre. Il en résulte une possible déformation de l'image.

Par ailleurs, le serrage de la bride peut entraîner un mouvement parasite longitudinal de l'objectif, entraînant ainsi une défocalisation, ou encore une déviation de son axe optique résultant dans un décentrage de l'image sur la barrette d'analyse.

Enfin, la bride constituant un élément séparé entraîne des coûts supplémentaires, tant de fabrication que de montage.

La présente invention vise à pallier ces inconvénients.

Le document JP-A-196612 décrit pour sa part un dispositif de réglage d'un anamorphoseur dans lequel ce dernier est maintenu poussé contre un berceau de support par deux vis assurant en outre son réglage en inclinaison autour de son axe optique. Ces vis, introduisant des contraintes localisées, rendent ce dispositif inadaptable à une fixation d'objectif répondant aux problèmes à la base de l'invention.

On connaît par ailleurs par le document US-A-3381924 un dispositif de montage d'une lunette de visée sur une arme à feu permettant d'utiliser soit cette lunette, soit le viseur de l'arme. Ce montage est assuré à l'aide de berceaux et de brides indépendantes des berceaux. Ici, l'effort de serrage est donc vertical, et donc toujours dissymétrique par rapport à l'axe optique (ce qui d'ailleurs, dans une telle application, ne présente aucune espèce d'inconvénient).

Afin de résoudre les problèmes à la base de l'invention, celle-ci a pour objet un dispositif du type ci-dessus, caractérisé par le fait qu'il comprend un berceau formant une surface cylindrique de support, et une bride de maintien également cylindrique, sensiblement complémentaire du berceau sur une certaine distance axiale, la bride étant solidaire du berceau à une de ses extrémités circonférentielles et ayant son autre extrémité circonférentielle libre et agencée pour être rapprochée du berceau de manière à exercer, sur un objectif placé entre le berceau et la bride, un effort de maintien appliquant l'objectif sur le berceau.

Le berceau et la bride étant sensiblement complémentaires, et bien entendu de diamètre à peu près égal à celui de l'objectif qu'ils visent à recevoir, exercent sur celui-ci un effort radial symétrique, n'entraînant ni déformation de l'objectif, et donc de l'image, ni déplacement axial de celui-ci entraînant une défocalisation, ni déviation de l'axe optique engendrant un mauvais centrage de l'image. En outre, la bride est facilement réalisée d'une seule pièce avec le berceau, réduisant ainsi les coûts de fabrication et de montage. L'invention résoud par conséquent l'ensemble des problèmes posés par les moyens de fixation de l'art antérieur.

Dans un mode de réalisation particulier de l'invention, l'extrémité libre de la bride est rapprochée du berceau du fait de l'élasticité de cette bride.

Aucun organe particulier de serrage ne doit par conséquent être prévu dans ce mode de réalisation. Une fois l'objectif mis en place et sa position réglée, un point de colle pourra avantageusement maintenir l'objectif par rapport à ses moyens de fixation de manière à empêcher tout mouvement axial dû par exemple à des vibrations.

Dans un autre mode de réalisation, le dispositif selon l'invention comprend des moyens de serrage pour rapprocher l'extrémité libre de la bride du berceau.

Il peut par exemple s'agir d'une vis traversant cette extrémité libre et vissée dans le berceau.

L'invention a également pour objet un dispositif du type ci-dessus, dans lequel le berceau possède une dimension axiale supérieure à celle de la bride.

Dans une telle réalisation, le berceau dépasse par conséquent axialement d'un côté ou de l'autre de la bride. Cette partie dépassante permet de faciliter le montage et le réglage de l'objectif par un outillage automatique. Elle peut en effet servir de surface d'appui sur laquelle l'objectif est amené en premier lieu, puis de surface de glissement pour un déplacement axial de l'objectif permettant le réglage de sa position.

On décrira maintenant à titre d'exemple non limitatif un mode de réalisation particulier de l'invention en référence aux dessins schématiques annexés, dans lesquels :

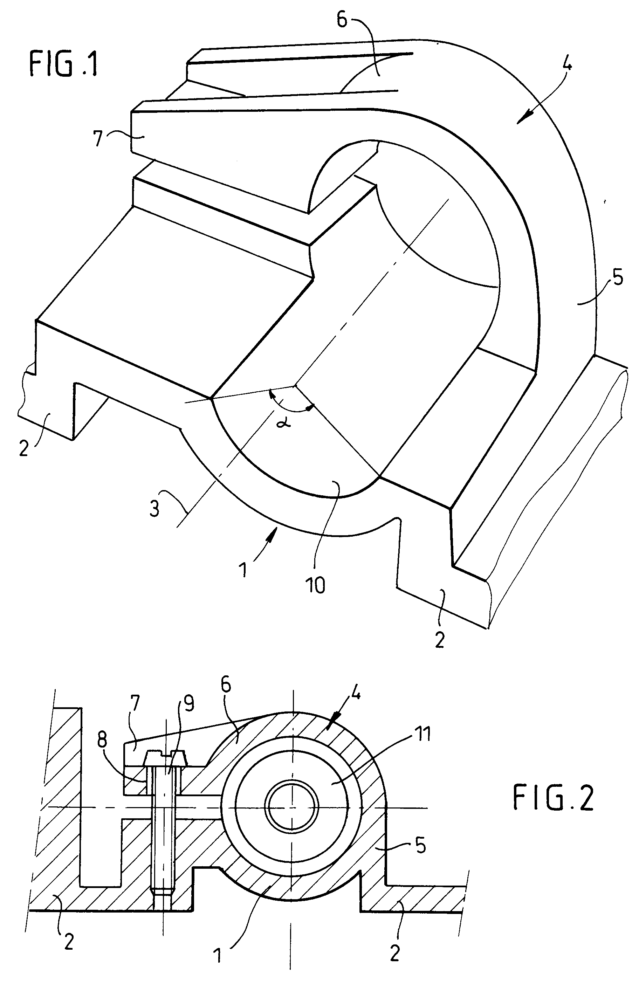

- la figure 1 est une vue en perspective d'un dispositif selon l'invention et,
- la figure 2 en est une vue en coupe transversale.

Comme montré aux dessins, le dispositif de fixation selon l'invention comprend un berceau 1 réalisé de préférence en matière plastique d'une seule pièce avec le bâti 2 de l'appareil utilisateur, par exemple un télécopieur.

La surface intérieure du berceau 1 est une surface cylindrique de rayon sensiblement égal à celui de l'objectif destiné à être fixé par ce dispositif. La' surface cylindrique intérieure du berceau 1 s'étend angulairement sur un angle a inférieur à 180 degrés, autour de l'axe 3 de cette surface.

Une bride 4 est réalisée d'une seule pièce avec le berceau 1 dont elle est solidaire à une de ses extrémités circonférentielles 5.

La bride 4 possède également une surface intérieure cylindrique, de même rayon que celle du berceau, et se raccordant à celle-ci de manière à former sur la distance axiale correspondant à la largeur de la bride 4, une surface sensiblement complémentaire de celle du berceau, et par conséquent sensiblement un cylindre complet.

L'épaisseur axiale de la bride 4 est toutefois, dans le cas présent, très inférieure à la dimension axiale du berceau 1.

L'extrémité libre 6 de la bride 4 est espacée du berceau, de manière à pouvoir être rapprochée de ce dernier, en assurant un serrage d'un objectif disposé entre le berceau et la bride.

A cet effet, l'extrémité libre 6 de la bride forme un prolongement 7 dans lequel est ménagé un orifice 8 permettant le passage d'une vis 9 engagée dans un filetage du berceau 2.

Le montage d'un objectif dans le dispositif qui vient d'être décrit s'effectue en posant celui-ci sur la surface 10 du berceau 1 dépassant de la bride 4, puis en le faisant coulisser le long de l'axe 3, jusqu'à ce que la mise au point soit effectuée. La vis 9 est alors serrée pour fixer une fois pour toute la position de l'objectif.

## Revendications

1. Dispositif pour la fixation de l'objectif d'un appareil d'analyse de document tel qu'un télécopieur, caractérisé par le fait qu'il comprend un berceau (1) formant une surface cylindrique de support, et une bride de maintien (4) également cylindrique, sensiblement complémentaire du berceau sur une certaine distance axiale, la bride étant solidaire du berceau à une (5) de ses extrémités circonférentielles et ayant son autre extrémité circonférentielle (6) libre et agencée pour être rapprochée du berceau de manière à exercer, sur un objectif (11) placé entre le berceau et la bride, un effort de maintien appliquant l'objectif sur le berceau.

2. Dispositif selon la revendication 1, dans lequel l'extrémité libre de la bride est rapprochée du berceau du fait de l'élasticité de cette bride.

3. Dispositif selon la revendication 1, comprenant des moyens de serrage (9) pour rapprocher l'extrémité libre de la bride du berceau.

4. Dispositif selon l'une quelconque des revendications 1 à 3, dans lequel le berceau possède une dimension axiale supérieure à celle de la bride.
